# EUROPÄISCHE PATENTANMELDUNG

(11) **EP 2 520 993 A2**
(43) Veröffentlichungstag der Anmeldung: **07.11.2012**
(21) Anmeldenummer: 12166791.9
(22) Anmeldetag: 04.05.2012
(51) Int. Cl.: G05B 19/409, G06F 3/01, G10L 15/26

(54) **Vorrichtung zum Bedienen einer automatisierten Maschine zur Handhabung, Montage oder Bearbeitung von Werkstücken**

(30) Priorität: 06.05.2011 DE 102011075467
(71) Anmelder: DECKEL MAHO Pfronten GmbH, 87459 Pfronten (DE)
(72) Erfinder: Gronbach, Dr. Hans, 87637 Eisenberg (DE)
(74) Vertreter: MERH-IP Matias Erny Reichl Hoffmann

(57) **Zusammenfassung**

Die vorliegende Erfindung betrifft eine Vorrichtung 2 zum Bedienen einer automatisierten Maschine 1 zur Handhabung, Montage oder Bearbeitung von Werkstücken, mit: einer Anzeigeeinrichtung 10 mit einem Bildschirm 11 zur Anzeige einer graphischen Benutzeroberfläche zum Steuern und/oder Überwachen von Maschinenfunktionen der Maschine 1, einer Bedieneinrichtung 20 zur Eingabe von befehlsauslösenden Bedienhandlungen zum Steuern von Maschinenfunktionen der Maschine 1 und zum Steuern von Funktionen der graphischen Benutzeroberfläche durch eine Bedienperson der Maschine 1, und eine Steuereinrichtung 30 zum Umsetzen von eingegebenen befehlsauslösenden Bedienhandlungen in zugeordnete Steuerbefehle zum Steuern von Maschinenfunktionen der Maschine 1 und/oder von Funktionen der graphischen Benutzeroberfläche durch die Bedienperson. Die Bedieneinrichtung 20 umfasst eine Einrichtung 21 zur Eingabe von manuellen Bedienhandlungen und eine Einrichtung 22 zur Eingabe von berührungslosen Bedienhandlungen, wobei die Einrichtung 22 zur Eingabe von berührungslosen Bedienhandlungen umfasst: ein Sensorsystem 40 zum Erfassen von berührungslosen Handlungen der Bedienperson, und eine Detektionseinrichtung 60 zum Detektieren einer befehlsauslösenden Bedienhandlung der Bedienperson anhand der durch das Sensorsystem 50 erfassten berührungslosen Handlungen der Bedienperson.

## Beschreibung

Die vorliegende Erfindung betrifft eine Vorrichtung zum Bedienen einer automatisierten Maschine zur Handhabung, Montage oder Bearbeitung von Werkstücken, insbesondere einer numerisch gesteuerten Werkzeugmaschine. Die Bedienvorrichtung umfasst eine Anzeigeeinrichtung mit einem Bildschirm zur Anzeige einer graphischen Benutzeroberfläche zum Steuern und/oder Überwachen von Maschinenfunktionen der Maschine; eine Bedieneinrichtung zur Eingabe von befehlsauslösenden Bedienhandlungen zum Steuern von Maschinenfunktionen der Maschine und zum Steuern von Funktionen der graphischen Benutzeroberfläche durch eine Bedienperson der Maschine; und eine Steuereinrichtung zum Umsetzen von eingegebenen befehlsauslösenden Bedienhandlungen in zugeordnete Steuerbefehle zum Steuern von Maschinenfunktionen der Maschine und/oder von Funktionen der graphischen Benutzeroberfläche durch die Bedienperson.

Ferner betrifft die vorliegende Erfindung eine automatisierte Maschine zur Handhabung, Montage oder Bearbeitung von Werkstücken, insbesondere eine numerisch gesteuerte Werkzeugmaschine, umfassend eine vorstehend beschriebene Vorrichtung zum Bedienen der automatisierten Maschine.

### Hintergrund der Erfindung

Bei der im Stand der Technik bekannten Maschinenbedienung bzw. Maschinesteuerung von Maschinen zur Handhabung, Montage oder Bearbeitung von Werkstücken, wie z.B. numerisch gesteuerten Werkzeugmaschinen, mittels bekannter Bedienvorrichtungen ist eine Bedienung mittels rein manuellen Bedienhandlungen vorgesehen, die an einer Bedienstation der Maschine ausgeführt werden. Hierbei werden manuell bedienbare Bedienelemente genutzt, wie z.B. alphanumerische Tastaturen, weitere Eingabetasten für maschinenspezifische Bedienungen, Drehregler, Softkeys, Computermäuse usw., um Anweisungen an die Maschinensteuerung zu übermitteln.

Das Feedback zu den manuellen Bedienhandlungen wird im Wesentlichen über eine graphische Benutzeroberfläche auf einem Bildschirm an der Bedienstation aber auch gegebenenfalls über Signallampen ausgegeben. Bedienhandlungen können für vielfältige Steuerungs- oder Überwachungsfunktionen der Maschine vorgesehen sein und reichen von Parameteränderungen bis hin zum Verfahren der Maschinenachsen und Schalten von Maschinenfunktionen.

Zur manuellen Steuerung von numerisch gesteuerten automatisierten Maschinen zur Handhabung, Montage oder Bearbeitung von Werkstücken mittels einer Bedienstation ist im Stand der Technik zum Beispiel die SINUMERIK Steuerung für CNC-Maschinen der Firma Siemens bekannt, die eine Software einschließlich graphischer Benutzeroberfläche bereitstellt, mit der Bedienstationen an einer automatisierten Maschinen zur Handhabung, Montage oder Bearbeitung von Werkstücken zum Steuern von Maschinenfunktionen der Maschine und zum Steuern von Funktionen der graphischen Benutzeroberfläche durch eine Bedienperson eingerichtet werden können.

Bedienhandlungen des Bedieners erfolgen im Stand der Technik folgendermaßen: Der Maschinenbediener hat eine Vorstellung dessen, was er der Maschinensteuerung im Rahmen der von der Steuerungs- bzw. Bedienvorrichtung bereitgestellten Steuerungs- bzw. Bedienfunktion mitteilen möchte bzw. was die Maschine bzw. einzelne Achsen und Aktoren tun sollen. Der Bediener möchte beispielsweise bestimmte Bildschirmmasken der graphischen Benutzeroberfläche betrachten oder er möchte befehlen, dass sich ein Bearbeitungswerkzeug, eine Montagevorrichtung, ein Greifer oder ähnliches relativ zum Werkstück bewegt. Die Bedienhandlung wird dabei übermittelt, indem der Bediener bestimmte Bedienelemente oder eine Abfolge von Bedienelementen auf einem entsprechenden Bedienfeld direkt manuell betätigt.

Die Bediengeschwindigkeit ist davon abhängig, wie ergonomisch das jeweilige Bedienfeld gestaltet ist und wie geschickt der Bediener damit umgeht. Die Umschaltung zwischen verschiedenen Bildschirmmasken der graphischen Benutzeroberfläche erfolgt meistens mittels sogenannter Softkeys, d.h. Tasten neben dem Bildschirm, deren Funktion abhängig von der jeweiligen Maske wechseln kann, wobei die jeweilige Funktion direkt neben der Taste auf dem Bildschirm angezeigt wird.

Bevor der Bediener eine Taste des Bedienfeldes betätigt, wird er immer zuerst erst schauen müssen, wo die zu bedienende Taste ist und ob er auch die richtige Taste betätigt. Die Bedienung eines Steuerungsbedienfeldes kann hierbei nicht intuitiv ausgeführt werden und ist insbesondere nicht ohne Blickkontakt zu den Bedienelementen durchführbar.

Weiterhin ergibt sich das Problem, dass der Bediener Bedienhandlungen immer nur direkt manuell an der Bedienstation der Maschine selbst ausführen kann. Bei näherem Herangehen an die Maschine z.B. zum Einblicken in den Bearbeitungsraum in der Maschine, bei Wartungsarbeiten im Bearbeitungsraum der Maschine oder an von der Bedienstation entfernten Bauteilen der Maschine ist es dem Bediener nicht möglich, Bedienhandlungen auszuführen. Auch die aus Sicherheitsaspekten heraus erforderliche Möglichkeit, in auftretenden gefährlichen Situationen, bei der Gefahr für Mensch und/oder Maschine besteht, einen sofortigen Not-Aus an der Maschine auslösen zu können, ist nur rein direkt manuell mittels der Betätigung von Not-Aus-Schaltern der Maschine möglich. Befindet sich der Bediener nicht in Nähe eines Not-Aus-Schalters, wenn eine derartige Situation auftritt, verliert der Bediener wertvolle Zeit, da er erst einen Not-Aus-Schalter erreichen muss, bis das erforderliche Not-Aus ausgelöst werden kann.

### Zusammenfassung der Erfindung

Im Hinblick auf die im Stand der Technik bekannten Bedienvorrichtungen zum Bedienen einer automatisierten Maschine zur Handhabung, Montage oder Bearbeitung von Werkstücken, bei der immer rein direkt manuell an der Bedienvorrichtung ausgeführte Bedienhandlungen der Bedienperson mittels Berührung eines Bedienelements vorgesehen sind, ist es eine Aufgabe der vorliegenden Erfindung, die Bedienbarkeit und die Bedienmöglichkeiten an einer derartigen Bedienvorrichtung zu verbessern, um eine intuitivere, flexiblere, effizientere und auch sicherere Bedienung bzw. Steuerung der Maschine zu ermöglichen.

Zur Lösung der vorstehend genannten Aufgabe der vorliegenden Erfindung wird gemäß den unabhängigen Ansprüchen eine Vorrichtung zum Bedienen einer automatisierten Maschine zur Handhabung, Montage oder Bearbeitung von Werkstücken sowie eine automatisierte Maschine zur Handhabung, Montage oder Bearbeitung von Werkstücken umfassend eine derartige Vorrichtung vorgeschlagen. Abhängige Ansprüche betreffen bevorzugte Ausführungsbeispiele der Erfindung.

Der vorliegenden Erfindung liegt die Idee zu Grunde, neben der im Stand der Technik bekannten manuellen Bedienung einer Bedienvorrichtung zum Bedienen einer automatisierten Maschine zur Handhabung, Montage oder Bearbeitung von Werkstücken mittels manuell ausgeführter Bedienhandlungen der Bedienperson, eine die Bedienbarkeit ergänzende weitere Bedienmöglichkeit vorzusehen, bei der berührungslose Handlungen der Bedienperson als berührungslose Bedienhandlungen zum Bedienen bzw. Steuern der Maschine erfasst und erkannt werden können, um eine intuitivere, flexiblere, effizientere und auch sicherere Bedienung bzw. Steuerung der Maschine zu ermöglichen.

Berührungslose Bedienhandlungen des Bedieners können hierbei zweckmäßigerweise zum Beispiel optisch und/oder akustisch erfasst werden. Somit können erfindungsgemäß zusätzlich zu herkömmlichen direkten und manuellen Bedienmöglichkeiten weitere berührungslose Bedienungsmöglichkeit bereitgestellt werden, die die gesamte Bedienbarkeit bzw. Steuerung der Maschine für den Bediener wesentlich intuitiver, flexibler, effizienter und auch sicherer ausgestalten.

Schon durch die Kombinationsmöglichkeit von herkömmlichen manuellen Bedienmöglichkeiten als auch den erfindungsgemäßen zusätzlichen berührungslosen Bedienmöglichkeiten wird es dem Bediener vorteilhaft gestattet, die Bedienung und auch Steuerung der Maschine gemäß seinen eigenen Präferenzen flexibler und effizienter ausführen zu können. Zudem kann die Bedienung mittels berührungsloser Bedienhandlungen wesentlich intuitiver ausgestaltet werden, wobei der Bediener zudem je nach Intuition entweder manuelle Bedienhandlungen oder auch entsprechende berührungslose Bedienhandlungen ausführen kann, sofern ihm das intuitiver erscheint.

Eine effizientere und intuitivere Bedienung kann erfindungsgemäß auch deshalb bereitgestellt werden, da der Bediener für berührungslose Bedienhandlungen im Gegensatz zu manuellen Bedienhandlungen vor Betätigung nicht erst durch Blicke manuell bedienbare Bedienelemente suchen muss, sondern direkt die berührungslosen Bedienhandlungen ausführen kann. Gleichzeitig kann er insbesondere bei der Nutzung von optischer Erkennung von Bedienhandlungen wie zum Beispiel Handgesten oder der Erfassung von akustischen Bedienhandlungen bei Ausführung der jeweiligen Bedienhandlung für ihn interessant erscheinende Informationen auf der graphischen Benutzeroberfläche betrachten oder sogar in den Bearbeitungsraum blicken, wodurch die Sicherheit, Effizienz und Flexibilität der Bedienbarkeit weiterhin enorm gesteigert werden kann.

Ein weiterer wichtiger Vorteil kann erfindungsgemäß dadurch erzielt werden, dass der Bediener zur Bedienung der Maschine nicht mehr nur auf direkt an der Bedienstation manuell auszuführende Bedienhandlungen begrenzt ist, sonder dass er mittels der bereitgestellten berührungslosen Bedienmöglichkeiten auch Bedienhandlungen ausführen kann, wenn er nicht direkt an der Bedienstation steht. Dies kann es dem Bediener bei Bedienung der Maschine insbesondere ermöglichen, sich von der direkt an der Bedienstation liegenden Position, die sich für direkte manuelle Bedienung eignet, zu entfernen, um sich gegebenenfalls besseren Einblick auf Bauteile der Maschine oder in den Bearbeitungsraum zu verschaffen, und zeitgleich doch noch berührungslose Bedienhandlungen zur Bedienung oder Steuerung der Maschine ausführen zu können. Insbesondere für das sicherheitsrelevante Auslösen eines Not-Aus an der Maschine bei einer auftretenden Gefahrensituation ist dies besonders zweckmäßig, da der Bediener nicht unter Zeitverlust erst den nächstliegenden Not-Aus-Schalter erreichen muss, sondern direkt und zeitnah berührungslos auslösen kann, wenn es erforderlich ist.

Optisch erfassbare berührungslose Bedienhandlungen der Bedienperson im Sinne der Erfindung umfassen hierbei vorzugsweise mittels computerimplementierter optischer Bildverarbeitungsverfahren erkennbare vordefinierte Gestenhandlungen des Bedieners, die dieser mit einer oder beiden Händen ausführen kann, und auch vorzugsweise mittels computerimplementierter optischer Bildverarbeitungsverfahren erkennbare mimische Bedienhandlungen des Bedieners, die dieser mit seinem Gesicht ausführen kann. Derartige mimische Bedienhandlungen können zum Beispiel besonders zweckmäßig durch Bewegungen mit den Augen realisiert werden (z.B. Blickrichtungserkennung, Erkennung von Lidschlag).

Akustisch erfassbare berührungslose Bedienhandlungen der Bedienperson im Sinne der Erfindung umfassen vorzugsweise vordefinierte Sprachbefehle, die mittels einer computerimplementierten Spracherkennung erkannt werden können, sie können aber auch gemäß vorteilhafter Ausführungen lediglich die Erfassung der Lautstärke von menschlichen Lautrufen oder Schreien umfassen, was insbesondere für Bedienhandlungen zur Auslösung eines Not-Aus an der Maschine eine erhebliche Verbesserung der Sicherheit an der Maschine ermöglicht, wenn z.B. ein Not-Aus an der Maschine ausgelöst wird, sobald ein menschlicher Schrei oberhalb eines Grenzlautstärkewerts und/oder mit einer oberhalb eines Grenzwerts liegenden zeitlichen Länge erfasst wird. Somit kann ein Not-Aus selbst dann noch ausgelöst werden, wenn ein Bediener in eine gefährliche Situation gerät, die das Auslösen eines Not-Aus erfordert, und es ihm zeitgleich nicht mehr selbst möglich ist, einen Not-Aus-Schalter der Maschine zu erreichen.

Zusammenfassend ermöglicht es die vorliegende Erfindung auf äußerst zweckmäßige Weise, die Bedienbarkeit einer automatisierten Maschine zur Handhabung, Montage oder Bearbeitung von Werkstücken wie z.B. einer numerisch gesteuerten Werkzeugmaschine zu erweitern und effizienter, flexibler, intuitiver als auch noch sicherer zu gestalten, indem zusätzlich zu den herkömmlich bekannten direkten manuellen Bedienmöglichkeiten durch Berührung von Bedienelementen an einer Bedienvorrichtung der Maschine weitere Bedienmöglichkeiten geschaffen werden, die es der Bedienperson der Maschine ermöglichen, Bedien- bzw. Steuerbefehle an der Maschine durch berührungslose Bedienhandlungen auszulösen.

Gemäß einem ersten Aspekt der Erfindung wird eine Vorrichtung zum Bedienen einer automatisierten Maschine zur Handhabung, Montage oder Bearbeitung von Werkstücken vorgeschlagen, insbesondere eine Vorrichtung zum Bedienen einer numerisch gesteuerten Werkzeugmaschine.

Die Vorrichtung gemäß des ersten Aspekts umfasst eine Anzeigeeinrichtung mit einem Bildschirm zur Anzeige einer graphischen Benutzeroberfläche zum Steuern und/oder Überwachen von Maschinenfunktionen der Maschine, eine Bedieneinrichtung zur Eingabe von befehlsauslösenden, insbesondere manuellen Bedienhandlungen zum Steuern von Maschinenfunktionen der Maschine und zum Steuern von Funktionen der graphischen Benutzeroberfläche durch eine Bedienperson der Maschine und eine Steuereinrichtung zum Umsetzen von eingegebenen befehlsauslösenden Bedienhandlungen in zugeordnete Steuerbefehle zum Steuern von Maschinenfunktionen der Maschine und/oder von Funktionen der graphischen Benutzeroberfläche durch die Bedienperson.

Erfindungsgemäß umfasst die Bedieneinrichtung eine Einrichtung zur Eingabe von manuellen Bedienhandlungen und eine Einrichtung zur Eingabe von berührungslosen Bedienhandlungen. Hierbei umfasst die Einrichtung zur Eingabe von berührungslosen Bedienhandlungen ein Sensorsystem zum Erfassen von berührungslosen Handlungen der Bedienperson und eine Detektionseinrichtung zum Detektieren einer befehlsauslösenden Bedienhandlung der Bedienperson anhand der durch das Sensorsystem erfassten berührungslosen Handlungen der Bedienperson.

Erfindungsgemäß umfasst die Bedieneinrichtung somit sowohl eine herkömmlich bekannte Eingabeeinrichtung zum Eingeben von manuellen Bedienhandlungen durch Berührung von Bedienelementen, wie z.B. Bedienen von Bedientasten einer Tastatur, Bedienen einer Maus, Bedienen von Joysticks, Softkeys, Drehreglern, Schaltern und/oder Knöpfen, als auch eine Eingabeeinrichtung zum Eingeben von berührungslosen Bedienhandlungen, die vorzugsweise optisch und/oder akustisch mittels eines Sensorsystems erfasst werden und mittels einer Detektionseinrichtung detektiert werden. Wie bereits vorstehend beschrieben, ermöglicht dies, die Bedienbarkeit einer automatisierten Maschine zur Handhabung, Montage oder Bearbeitung von Werkstücken zu erweitern und effizienter, flexibler, intuitiver sowie noch sicherer zu gestalten.

Gemäß einer besonders zweckmäßigen bevorzugten Ausführungsform der vorliegenden Erfindung ist es vorgesehen, dass die Einrichtung zur Eingabe von berührungslosen Bedienhandlungen dazu eingerichtet ist, berührungslose Bedienhandlungen der Bedienperson optisch zu erfassen. Dies hat den Vorteil, dass ein sehr breites Spektrum von unterschiedlichen Handlungen der Bedienperson optisch erfasst werden kann, indem ein Sensorsystem vorgesehen ist, welches berührungslose körperliche Handlungen der Bedienpersonen optisch erfassen kann, wobei diese optisch erfassten Bedienhandlungen dann mittels computerimplementierte Bildverarbeitung ausgewertet und erkannt werden können. Derartige optisch erfassbare Handlungen einer Bedienperson umfassen insbesondere Änderungen der Körperhaltung, Mimik, Gestik, als auch jegliche Körperteilbewegungen, wie z.B. Armbewegungen, Kopfbewegungen (z.B. Kopfnicken oder auch Kopfschütteln) der Bedienperson. Mittels elektronischer und computerimplementierter Bildverarbeitung in der Detektionseinrichtung ist es hierbei möglich, diese Bedienhandlungen zu erkennen und ggf. mit vordefinierten Bedienhandlungen abzugleichen, die einzelnen Bedienbefehlen oder Bedienfunktionen zugeordnet sind, so dass diese dann mittels der Steuereinrichtung ausgeführt werden können.

Hierbei weist das Sensorsystem vorzugsweise ein Kamerasystem mit zumindest einer Kamera zum optischen Erfassen von mimischen und/oder gestischen Handlungen der Bedienperson auf. Zudem umfasst die Detektionseinrichtung vorzugsweise eine Bildverarbeitungseinrichtung, die dazu eingerichtet ist, auf Grundlage von Sensorsignalen des Kamerasystems eine Bilderkennung durchzuführen zum optischen Erkennen von mittels des Kamerasystems erfassten berührungslosen Bedienhandlungen der Bedienperson. Hierbei weist das Kamerasystem gemäß einer besonders zweckmäßigen bevorzugten Ausführung zumindest zwei voneinander beabstandet angeordnete Kameras zum optischen Erfassen von mimischen und/oder gestischen Handlungen der Bedienperson auf, wobei die Bildverarbeitungseinrichtung vorzugsweise dazu eingerichtet ist, auf Grundlage von Sensorsignalen des Kamerasystems eine dreidimensionale Bilderkennung durchzuführen.

Das technische Gebiet der optischen Erkennung von optisch erkennbaren Handlungen einer Person mittels elektronischer Bildverarbeitung hat in den letzen Jahren große Fortschritte gemacht und wird z.B. durch das Fraunhofer-Institut für Digitale Medientechnologie untersucht. Hierbei wurden am Fraunhofer-Institut für Digitale Medientechnologie Methoden und Technologien entwickelt, die es z.B. ermöglichen, eine optische Augen- bzw. Pupillen-Erfassung mittels eines Kamerasystems durchzuführen, wobei Lidschlag (Blinzeln) als auch die Blickrichtung einer Person mittels Bildverarbeitungssoftware in Zusammenwirkung mit einfachen Hardwaremitteln einschließlich eines Kamerasystems bestehend aus einfachen Kameras, wie z.B. Web-Cams, zuverlässig erkannt werden kann.

Derartige Kamerasysteme ermöglichen ab der Verwendung von zwei beabstandeten Kameras bereits eine dreidimensionale Bilderkennung. Siehe hierzu z.B. den Artikel zum System des "Integrated Eyetracker" auf der Seite *www.idmt.fraunhofer.de.* Das beschriebene System "Integrated Eyetracker" ermöglicht es demzufolge, eine berührungslose und völlig kalibrationsfreie 3-D-Blickrichtungsbestimmung bereitzustellen. Durch die Verwendung spezieller Mini-Kameras kann das Eyetracking-System selbst auf kleinstem Raum eingebaut werden, wobei durch den Einsatz von zwei oder mehr Kameras und eine Verarbeitung der Bilder in 200 fps eine Information über die Blickrichtung in Echtzeit nach jedem Bild möglich ist. Insbesondere ermöglicht dieses Eye-Tracking System eine Blickrichtungserkennungsgenauigkeit von kleiner 1 Grad bei Bestimmung der Pupillenposition auf genauer als 1 mm. Die Entfernung des Nutzers ist nur abhängig von dem Fokusbereich des eingesetzten Objektivs, wobei der Bewegungsbereich des Nutzers kaum eingeschränkt ist, da er sich praktisch im gesamten Sichtbereich des Kamerasystems bewegen kann, solange zumindest zwei Kameras die Augen erfassen können.

Durch die Erweiterung des Kamerasystems durch geeignete Anordnung einer Mehrzahl von Kameras kann die Bewegungsfreiheit des Nutzers somit ausgehend von der Position des Bedienpults immer weiter vergrößert werden und praktisch auf den ganzen Bereich um die zu bedienende Maschine vergrößert werden. Eine Blickrichtungserkennung der Bedienperson ist somit mit einfachen technischen Mitteln prinzipiell im gesamten Bereich um die zu bedienende bzw. zu steuernde Maschine möglich. Bei herkömmlichen Bedienmöglichkeiten über ein rein manuell bedienbares Bedienpult ist die Bedienung dahingegen unzweckmäßiger weise auf die direkte manuelle Bedienung an der Position der Bedienstation begrenzt.

Auch betreffend der Gestenerkennung wurde am Fraunhofer-Institut für Digitale Medientechnologie eine Technologie mit der Bezeichnung "GesturelD" entwickelt, die es ermöglicht, mittels eines einfachen Kamerasystems in Zusammenwirkung mit Bildverarbeitungssoftware Gesten eines Nutzers optisch zu erfassen und zu erkennen. Siehe hierzu z.B. den Artikel zum System des "GesturelD" auf der Seite *www.idmt.fraunhofer.de.* Das beschriebene System basiert demzufolge auf Objekterkennungsalgorithmen, die anhand detaillierter Studien der menschlichen visuellen Wahrnehmung entwickelt wurden, wobei Vorverarbeitungsalgorithmen alle notwendigen Informationen einer vorgegebenen visuellen Szene filtern, die menschliche Gesten lokalisieren und diese Informationen an ein Erkennungsmodul weiterleiten, das die erfasste Geste analysiert und anschließend die damit verknüpfte Reaktion auslöst. Außerdem ist Gestenerkennung weiterhin in dreidimensional-bildverarbeitenden Sensorsystemen möglich, wie sie z.B. kürzlich für die Steuerung einer bekannten Videospielkonsole der Firma Microsoft entwickelt wurden. Derartige dreidimensional-bildverarbeitende Sensorsysteme ermöglichen insbesondere das Erfassen und Erkennen eines breiten Spektrums an berührungslosen Bedienhandlungen einschließlich Änderungen der Körperhaltung, Mimik, Gestik, als auch jegliche Körperteilbewegungen, wie z.B. Armbewegungen, Kopfbewegungen (z.B. Kopfnicken oder auch Kopfschütteln) der Bedienperson.

Gemäß einer besonders bevorzugten Ausführungsform ist das Kamerasystem dazu eingerichtet, Augen der Bedienperson optisch zu erfassen, wobei die Bildverarbeitungseinrichtung dazu eingerichtet ist, eine Blickrichtung der Bedienperson auf Grundlage von optisch erfassten Pupillen der Augen der Bedienperson zu erkennen, zum Beispiel gemäß des vorstehend beschriebenen Eye-Tracking Systems des Fraunhofer-Institut für Digitale Medientechnologie (siehe hierzu auch WO 03/065886 A1 und WO 2006/032253 A1). Dies kann gerade bei der Bedienung bzw. Steuerung von automatisierten Maschinen zur Handhabung, Montage oder Bearbeitung von Werkstücken, insbesondere numerisch gesteuerten Werkzeugmaschinen, besonders vorteilhaft genutzt werden, da die Blickrichtungserkennung neben der Erkennung einer Blickposition auf der graphischen Oberfläche für die berührungslose Ermittlung einer Cursorposition zum Steuern der graphischen Benutzeroberfläche an derartigen Maschinen weiterhin vielseitig einsetzbar ist, wenn zum Beispiel erkannt wird, dass der Bediener seinen Blick auf bestimmte Maschinenteile der Maschine richtet. Dann kann zum Beispiel besonders vorteilhaft diese Blickrichtungserkennung dazu genutzt werden, dem Bediener auf der graphischen Benutzeroberfläche Informationen zur Überwachung anzeigen und gegebenenfalls weiterhin auch Steuerungsmöglichkeiten dieses angeblickte Bauteil betreffend anbieten, die dann durch andere Bedienhandlungen ausgelöst werden können, insbesondere wieder berührungslos oder auch manuell.

Vorzugsweise ist die Bildverarbeitungseinrichtung dazu eingerichtet, eine Änderung der Augen- bzw. Pupillengröße in den Augen der Bedienperson zu detektieren. Die Steuereinrichtung ist dabei vorzugsweise dazu eingerichtet, einen Not-Aus an der Maschine auszulösen, wenn eine abrupte Augen- bzw. Pupillenvergrößerung eines Bedieners detektiert wird. Insbesondere ist Steuereinrichtung vorzugsweise und besonders zweckmäßigerweise dazu eingerichtet, einen Not-Aus an der Maschine auszulösen, wenn eine abrupte Augen- bzw. Pupillenvergrößerung des Bedieners detektiert wird und zugleich eine Blickrichtung des Bedieners als in den Bearbeitungsraum der Maschine blickend erkannt wird. Diese Ausführungsform hat den Vorteil, dass die Sicherheit an der zu bedienenden Maschine zur Handhabung, Montage oder Bearbeitung von Werkstücken erheblich verbessert werden kann, da ein Erschrecken des Bedieners, das durch das optische Erkennen einer Gefahrensituation (z.B. im Bearbeitungsraum der Maschine) ausgelöst wird und das sich durch die erkannte abrupte Augen- bzw. Pupillenvergrößerung erkennen lässt, direkt und ohne Verzögerung (die bei rein direkter manueller Bedienung naturgemäß durch eine verhältnismäßig lange Reaktionszeit bis zum aktiven Betätigen eines Not-Aus-Schalters durch den Bediener verursacht wird) in einen unmittelbaren Befehl zum sofortigen Auslösen eines Not-Halts umgewandelt werden kann.

Vorzugsweise ist die Bildverarbeitungseinrichtung dazu eingerichtet, auf Grundlage der erkannten Blickrichtung eine Blickposition der Bedienperson auf der graphischen Benutzeroberfläche zu erfassen. Dies hat den Vorteil, dass der Bediener intuitiv und effizient ohne zusätzliche Benutzung der Hände einen Cursor bzw. eine Position des Cursors auf der graphischen Benutzeroberfläche steuern kann, indem die Blickrichtung des Bedieners zur Führung der Cursorposition auf der graphischen Benutzeroberfläche benutzt werden kann.

Vorzugsweise ist die Steuereinrichtung dazu eingerichtet, auf Grundlage der erfassten Blickposition des Bedieners auf dem Bildschirm Bildschirmbereiche der graphischen Benutzeroberfläche aus- bzw. anzuwählen. Somit kann die Steuerung der graphischen Benutzeroberfläche auf dem Bildschirm der Bedieneinrichtung weiter verbessert werden, da der Bediener ohne zusätzliche manuelle Handlungen bei für andere Bedienhandlung freibleibenden Händen Bildschirmbereiche der graphischen Benutzeroberfläche aus- bzw. anwählen kann.

Vorzugsweise ist die Steuereinrichtung dazu eingerichtet, auf Grundlage der erfassten Blickposition des Bedieners auf dem Bildschirm Interaktionselemente der graphischen Benutzeroberfläche zu aktivieren. Somit kann die Steuerung der graphischen Benutzeroberfläche auf dem Bildschirm der Bedieneinrichtung weiter verbessert werden, da der Bediener ohne zusätzliche manuelle Handlungen bei für andere Bedienhandlung freibleibenden Händen auf dem Bildschirm Interaktionselemente der graphischen Benutzeroberfläche aktivieren kann.

Vorzugsweise ist die Steuereinrichtung dazu eingerichtet, auf Grundlage der erfassten Blickposition des Bedieners auf dem Bildschirm zwischen der Anzeige einer Mehrzahl von Bildschirmmasken der graphischen Benutzeroberfläche zu wechseln. Somit kann die Steuerung der graphischen Benutzeroberfläche auf dem Bildschirm der Bedieneinrichtung weiter verbessert werden, da der Bediener ohne zusätzliche manuelle Handlungen bei für andere Bedienhandlung freibleibenden Händen auf dem Bildschirm zwischen der Anzeige einer Mehrzahl von Bildschirmmasken der graphischen Benutzeroberfläche wechseln kann.

Vorzugsweise ist die Bildverarbeitungseinrichtung dazu eingerichtet, auf Grundlage der erkannten Blickrichtung eine Blickposition der Bedienperson auf Bauteilen der Maschine im Bearbeitungsbereich zu erfassen. Diese besonders vorteilhafte Ausführungsform ermöglicht es neben oder alternativ zu der vorstehend beschriebenen Ausnutzung der Blickpositionsbestimmung zum berührungslosen Steuern der graphischen Benutzeroberfläche die Blickpositionserkennung auf Bauteile der Werkzugmaschine zu erweitern.

Vorzugsweise ist die Steuereinrichtung dazu eingerichtet, auf Grundlage der erfassten Blickposition des Bedieners auf einem Bauteil der Maschine dem Bauteil zugeordnete Informations- bzw. Steuermasken auf der graphischen Benutzeroberfläche anzuzeigen. Hierbei ist es zweckmäßig und äußerst vorteilhaft, dass dem Bediener auf der graphischen Benutzeroberfläche unmittelbar Informationen und/oder zur Verfügung stehende Steuerungsoptionen bezüglich des betrachteten Bauteils der Maschine angezeigt werden können, so dass der Bediener Funktionen des Bauteils direkt durch zusätzliche manuelle oder berührungslose Bedienhandlungen steuern kann, ohne das Bauteil erst durch eine vorhergehende umständliche manuelle Bedienhandlung anwählen zu müssen.

Vorzugsweise ist die Bildverarbeitungseinrichtung dazu eingerichtet, einen Lidschlag der Bedienperson auf Grundlage von optisch erfassten Augen der Bedienperson zu erkennen. Vorzugsweise ist die Detektionseinrichtung dazu eingerichtet, auf Grundlage erfasster Lidschläge ein Lidschlagmuster zu erfassen, wobei ein Lidschlagmuster eine Anzahl von Lidschlägen und Zeitabstände zwischen Lidschlägen umfasst, wobei die Steuereinrichtung dazu eingerichtet ist, ein erfasstes vorbestimmtes Lidschlagmuster mit einer vorbestimmten Anzahl von Lidschlägen in einem vorbestimmten Zeitintervall einem Bestätigungssteuerbefehl zum Bestätigen einer berührungslosen Bedienhandlung zuzuordnen. Dies ermöglicht es dem Bediener auf vorteilhaft effiziente Weise, einfache Bedienbefehle nur mittels des Lidschlags (Blinzeln) zu steuern, wie z.B. Bedienbefehle, die ein einfaches Bestätigen oder Ablehnen eines zuvor gegebenen Befehls bei erneuter Rückfrage durch die graphische Benutzeroberfläche (welche zum Beispiel aus Sicherheitsgründen erforderlich sein kann) betreffen. Hierbei kann zum Beispiel vordefiniert bzw. voreingestellt sein, dass einmaliges, zweimaliges oder n-maliges Blinzeln bzw. ein einmaliger, zweimaliger oder n-maliger Lidschlag innerhalb eines zu bestimmenden Zeitintervalls als Bedienhandlung einer Bestätigung bzw. Ablehnung einer Steuerfunktion bzw. eines Auslösens einer Maschinenfunktion zugeordnet ist.

Gemäß einer weiteren besonders bevorzugten Ausführungsform ist das Kamerasystem dazu eingerichtet, Hände der Bedienperson optisch zu erfassen, wobei die Bildverarbeitungseinrichtung vorzugsweise dazu eingerichtet ist, eine manuelle Gestenhandlung der Bedienperson zu erkennen. Wie bereits vorstehend beschrieben kann ein derartiges System gemäß des Gestenerkennungssystems "GesturelD" des Fraunhofer-Instituts für Digitale Medientechnologie ausgeführt sein oder auch gemäß eines dreidimensional-bilderkennenden Sensorsystems, wie es zur Steuerung von Videospielkonsolen der Firma Microsoft entwickelt wurde. Auch hierbei kann die Gestenerkennung bei dreidimensional-bilderkennenden Verfahren gewährleistet werden, solange die Bedienperson die Gestenhandlung im Sensorbereich des Sensorsystems bleibt, zum Beispiel solange sich die Bedienperson bzw. deren Hände im Sichtbereich von zumindest zwei Kameras des Kamerasystems befinden. Durch geeigneten Ausbau eines Kamerasystems ist es somit möglich, die Gestenerkennung analog zur Blickrichtungserkennung im gesamten Bereich um die zu bedienende Maschine herum durchzuführen, wenn die Kameras des Kamerasystems um die Maschine herum derart angeordnet werden, dass jede Position im Bereich um die zu bedienende Maschine von zumindest zwei Kameras erfasst wird. Bei herkömmlichen Bedienmöglichkeiten über ein rein manuell bedienbares Bedienpult ist die Bedienung dahingegen unzweckmäßiger weise auf die direkte manuelle Bedienung an der Position der Bedienstation begrenzt.

Vorzugsweise ist die Bildverarbeitungseinrichtung dazu eingerichtet, Gestenbefehle einer Mehrzahl von vordefinierten Gestenbefehlen zu erkennen, wobei jeder vordefinierte Gestenbefehl einer bestimmten befehlsauslösenden Bedienhandlung zugeordnet ist. Dies ist von Vorteil, da eine Mehrzahl von Gestenbefehlen vordefiniert werden können, die eindeutig bestimmten befehlsauslösenden Bedienhandlung zugeordnet werden können, die der Bediener nur zu erlernen braucht, um auf die zusätzliche Möglichkeit der Bedienung durch berührungslose Gestenerkennung zurückgreifen zu können. Möchte der Bediener einen bestimmten Steuer- oder Bedienbefehl geben, muss er lediglich im Sichtbereich des Kamerasystems mit einer oder beiden Händen die den Steuer- oder Bedienbefehl auslösende Bedienhandlung ausführen, d.h. die diesem gewünschten Befehl zugeordnete Geste ausführen. Hierbei sind vielerlei verschiedene Gesten vom Bilden einer Faust bis Daumenzeig möglich, insbesondere ist es sogar denkbar, dass mittels gestischer Bedienhandlungen Zahlenwerte vorgegeben werden, indem Ziffern der einzugebenden Zahl (zum Beispiel zum Auswählen von einzuwechselnden Werkzeugen oder Werkstücken o.ä.) mittels Fingerzeig angezeigt werden, bei dem die Zahl der hochgehaltenen Finger (ein Finger bis zehn Finger) einer oder beider Hände die Ziffern zwischen 1 und 10 oder 0 und 9 anzeigt. Auch das Hochhalten der Arme bzw. Hände kann als befehlsauslösende Bedienhandlung definiert werden, z.B. kann ein Hochhalten beider Arme (als eindeutige Geste) genutzt werden zum sofortigen Auslösen eines Not-Aus an der Maschine. Insbesondere bei Kamerasystemen, die mit einfachen Mitteln den gesamten Bereich um die zu bedienende Maschine abdecken, kann ein Not-Aus sofort und direkt von beliebigen Positionen um die Maschine herum ausgelöst werden, so dass es nicht wie bei herkömmlichen Bedienvorrichtungen erforderlich ist, den nächstliegenden Not-Aus-Schalter zu erreichen. Somit kann die Sicherheit an den Maschinen erheblich verbessert werden.

Gemäß einer weiteren besonders zweckmäßigen bevorzugten Ausführungsform der vorliegenden Erfindung ist es vorgesehen, dass die Einrichtung zur Eingabe von berührungslosen Bedienhandlungen dazu eingerichtet ist, berührungslose Bedienhandlungen der Bedienperson akustisch zu erfassen. Hierbei weist das Sensorsystem vorzugsweise ein Mikrophonsystem zum Erfassen von akustischen Handlungen der Bedienperson auf. Somit können die Bedienmöglichkeiten an der zu bedienenden Maschine erheblich verbessert werden und wesentlich effizienter, intuitiver und flexibler ausgestaltet werden. Insbesondere bei Implementierung einer Spracherkennung, wie sie heutzutage bereits bei der Steuerung von Navigationssystemen in Kraftfahrzeugen zuverlässig angewendet werden kann, ergeben sich besondere Vorteile, da die Steuerung mittels Sprachbefehlen eine der intuitivsten Steuerungsmethoden bietet. Hierbei können an der Maschine viele Maschinenfunktionen bzw. Bedienfunktionen eindeutigen Sprachbefehlen zugeordnet werden, die der Bediener auszusprechen hat. Bei geeigneter Verwendung von mehreren Mikrophonen können derartige verbale Bedienhandlungen vorteilhaft im gesamten Bereich um die Maschine ausgeführt werden, um funktionsauslösende Befehle abzugeben.

Eine besonders zweckmäßige Ausführung ergibt sich wieder im Zusammenhang mit dem sofortigen Auslösen eines Not-Halts in einer Gefahrensituation, wenn z.B. durch Sprechen des Sprachbefehls "NOT-AUS" im gesamten vom Mikrophonsystem erfassten Bereich ein sofortiger Not-Aus an der Maschine ausgelöst werden kann, ohne zuerst den nächstliegenden manuell zu bedienenden Not-Aus-Schalter erreichen zu müssen.

Vorzugsweise weist die Detektionseinrichtung eine Spracherkennungseinrichtung zum Erkennen von mit dem Mikrophonsystem erfassten Spracheingaben des Bedieners auf. Vorzugsweise ist die Spracherkennungseinrichtung dazu eingerichtet, Sprachbefehle des Bedieners aus einer Mehrzahl von vordefinierten Sprachbefehlen zu erkennen, wobei jeder vordefinierte Sprachbefehl vorzugsweise einer bestimmten befehlsauslösenden Bedienhandlung zugeordnet ist. Dies ermöglicht es, wie vorstehend beschrieben, eine Mehrzahl von Sprachbefehlen einschließlich "JA", "NEIN", "WERKZEUGWECHSEL", "AN" bzw. "INBETRIEBNAHME" und/oder "NOT-AUS" in der Sprache des Bedieners zu definieren, die bestimmte entsprechende Befehle auslösen. Weiterhin ist es vorteilhaft denkbar, zum Auswählen bzw. Steuern von Bauteilen der Maschine derartige Bauteile direkt durch ihre Bezeichnung als Sprachbefehl umzusetzen, wie z.B. "X-ACHSE", "Y-ACHSE", "Z-ACHSE", "A-ACHSE", "B-ACHSE", "WERKZEUGWECHSLER", "PALETTE", "TÜR", "SPÄNEFÖRDERER", "RUNDTISCH", "SPINDEL" etc.

Vorzugsweise ist die Spracherkennungseinrichtung dazu eingerichtet, ein Sprachmuster eines mittels des Mikrophonsystems erfassten Sprachbefehls zu detektieren, wobei die Steuereinrichtung vorzugsweise dazu eingerichtet ist, einen Bediener mit einem zugeordneten gespeicherten Sprachmuster an der Maschine anzumelden und nur erfasste Sprachbefehle auszuführen, die ein detektiertes Sprachmuster entsprechend des dem angemeldeten Bediener zugeordneten Sprachmusters aufweisen. Dies ermöglicht es vorteilhaft, nur Sprachbefehle eines an der Maschine auch tatsächlich für die Bedienung angemeldeten (und somit für die Bedienung freigegebenen) Bedieners auszuführen, wobei Sprachbefehle oder Rufe eines anderen Menschen (z.B. eines Bedieners an einer benachbart angeordneten Maschine) ignoriert werden können, wenn erkannt wird, dass das Sprachmuster eines erkannten Sprachbefehls nicht dem Sprachmuster des angemeldeten Bedieners der Maschine entspricht. Etwaige Fehlausführungen von Sprachbefehlen, die nicht zur Bedienung der zu bedienenden Maschine gedacht sind, können somit vorteilhaft vermieden werden.

Vorzugsweise ist die Detektionseinrichtung dazu eingerichtet, einen von dem Mikrophonsystem erfassten Schrei bzw. akustischen Lautausruf eines Bedieners und dessen Lautstärke zu detektieren, wobei die Steuereinrichtung vorzugsweise dazu eingerichtet ist, einen Not-Aus an der Maschine auszulösen, wenn ein Schrei bzw. akustischer Lautausruf eines Bedieners mit einer Lautstärke größer eines vorbestimmten Lautstärkegrenzwerts von der Detektionseinrichtung detektiert wird. Hierdurch kann die Sicherheit an der Maschine weiter erheblich verbessert werden, da eine weitere Möglichkeit angeboten wird, bei auftretender Gefahrsituation an der Maschine einen sofortigen Not-Aus auslösen zu können, ohne erst einen manuell zu bedienenden Not-Aus-Schalter erreichen zu müssen. Insbesondere ist diese Ausführungsform zweckmäßig einsetzbar für Situationen, in denen die auftretende Gefahrensituation zu einer Verletzung des Bedieners führt oder führen kann (z.B. wenn dieser mit Körperteilen Kleidung an einem Bauteil der noch arbeitenden Maschine eingeklemmt wird) und der Bediener nicht aus eigener Kraft einen manuell zu bedienenden Not-Aus-Schalter erreichen kann, obwohl der Not-Aus dringend sofort erforderlich ist, um Verletzungen bzw. weitere Verletzungen des Bedieners oder anderer Betroffener zu vermeiden. Gemäß dieser zweckmäßigen Ausführungsform ist es dann möglich, auf Grundlage eines akustisch erfassten Schreis oder Lautausrufs, z.B. wenn dieser eine bestimmte Lautstärke überschreitet oder eine bestimmte zeitliche Länge überschreitet, einen sofortigen Not-Aus auszulösen (z.B. auch ausgelöst durch einsetzende Schmerzschreie bei Verletzung der Bedienperson, die primär nicht zum Auslösen eines Not-Aus intendiert sind, ein Auslösen eines sofortigen Not-Aus jedoch dringend nahelegen).

Gemäß einer weiteren besonders zweckmäßigen Ausführungsform ist die Eingabeeinrichtung zur berührungslosen Eingabe von Bedienbefehlen dazu eingerichtet, personenbezogen auf einen jeweiligen Bediener kalibriert zu werden, wobei die Eingabeeinrichtung vorzugsweise eine Datenschnittstelle aufweist zum Einlesen von personenbezogenen Kalibrierungsdaten, so dass die Kalibrierung auf den Bediener vorzugsweise auf Grundlage der personenbezogenen Kalibrierungsdaten durchgeführt wird. Wie bereits vorstehend beschrieben, ist es bei den meisten Bilderkennungsverfahren und Spracherkennungsverfahren oft nicht erforderlich, diese auf den einzelnen Bediener einzustellen bzw. zu kalibrieren. Jedoch kann es in einigen Fällen dennoch vorteilhaft sein, eine bedienerspezifische Kalibration durchzuführen, z.B. um eine Blickrichtungserkennung zu optimieren, indem die Größe des Bedieners eingegeben bzw. an die Bildverarbeitungseinrichtung übermittelt wird, oder um eine Spracherkennung wie vorstehend beschrieben zu optimieren, indem ein individuelles Sprachmuster eines angemeldeten Bedieners eingegeben bzw. an die Spracherkennungseinrichtung übermittelt wird. Hierzu ist es besonders zweckmäßig, wenn die Kalibration nicht jedes Mal erneut beim Anmelden des Bedieners bzw. bei Inbetriebnahme der Maschine durchgeführt werden muss, sondern einfach beim Anmelden des Bedieners bzw. bei Inbetriebnahme der Maschine automatisch personenbezogene Kalibrierungsdaten eingelesen werden, um die Kalibration effizienter und zeitsparender ausführen zu können. Vorzugsweise umfassen die Kalibrierungsdaten hierbei ein dem Bediener zugeordnetes Sprachmuster zum Kalibrieren einer Spracherkennungseinrichtung und/oder dem Bediener zugeordnete Körpermaßdaten zum Kalibrieren einer Bildverarbeitungseinrichtung.

Die vorstehend beschriebenen Merkmale der einzelnen bevorzugten Ausführungsformen der Bedienvorrichtung können hierbei einzeln aber auch in Kombination angewendet werden, wobei die Bedienbarkeit auf synergetische Weise bei Kombination verschiedener berührungsloser Bedienmöglichkeiten noch intuitiver, effizienter und sicherer ausgestaltet werden kann. Sollte der Bediener auf eine oder mehrere der berührungslosen Bedienmöglichkeiten aufgrund persönlicher Präferenzen verzichten wollen, kann es natürlich vorgesehen sein, dass diese eine oder mehrere der berührungslosen Bedienmöglichkeiten zeitweise jeweils einzeln oder auch in Kombination deaktiviert werden. So kann sichergestellt werden, dass der Bediener die Wahl hat, ob er akustisch erfassbare berührungslose Bedienmöglichkeiten benutzen möchte (z.B. durch die Möglichkeit des Aktiviers bzw. Deaktivierens der Spracherkennung) und/oder ob er optisch erfassbare berührungslose Bedienmöglichkeiten benutzen möchte (z.B. durch die Möglichkeit des Aktiviers bzw. Deaktivierens der Bildverarbeitung, der Blickrichtungserkennung, der Blickpositionserkennung und/oder der Gestenerkennung).

Gemäß einem zweiten Aspekt der Erfindung wird eine automatisierte Maschine zur Handhabung, Montage oder Bearbeitung von Werkstücken, umfassend eine Vorrichtung zum Bedienen einer automatisierten Maschine zur Handhabung, Montage oder Bearbeitung von Werkstücken gemäß einem oder mehrerer der vorstehend beschriebenen Ausführungsformen des ersten Aspekts der Erfindung vorgeschlagen. Hierbei ergeben sich im Wesentlichen die gleichen Möglichkeiten, Ausführungen und damit verbundenen Vorteile, die bereits jeweils vorstehend im Zusammenhang mit einer erfindungsgemäßen Bedienvorrichtung beschrieben wurden.

Gemäß einer besonders zweckmäßigen Ausführungsform ist die Maschine eine numerisch gesteuerte Werkzeugmaschine zur Bearbeitung eines Werkstücks. Die Vorrichtung zum Bedienen ist dann vorzugsweise mit einer numerischen Steuerung der Werkzeugmaschine, wie z.B. einer speicherprogrammierbaren Steuerung (PLC-Steuereinrichtung) der Werkzeugmaschine und/oder einer numerischen Steuereinrichtung (NC-Steuereinrichtung) der Werkzeugmaschine verbunden. Weiterhin kann die Vorrichtung zum Bedienen in einer bevorzugten Ausführungsform direkt mit einem Not-Aus-Steuerkreislauf der Werkzeugmaschine verbunden sein.

Die mittels der Vorrichtung steuerbaren Maschinenfunktionen der Werkzeugmaschine umfassen vorzugsweise zumindest eine Funktion aus: Inbetriebnahme der Werkzeugmaschine, Konfiguration der Werkzeugmaschine, Einrichten der Werkzeugmaschine, Nullpunktsetzen, Rettungsfunktionen, Not-Aus-Aktivierung der Werkzeugmaschine, Fehlerdiagnose, Wartung, Programmverwaltung, Werkstückhandhabung, Palettenhandhabung, Werkzeugeingabe, Werkzeugvermessung, Werkzeugwechsel, NC-Steuerungsfunktionen einschließlich Aktivieren und Steuern von NC-Achsen und Aktoren der Werkzeugmaschine und Programmierung der numerischen Steuerung.

Zusammenfassend ermöglicht es die vorliegende Erfindung auf äußerst zweckmäßige Weise, die Bedienbarkeit einer automatisierten Maschine zur Handhabung, Montage oder Bearbeitung von Werkstücken wie z.B. einer numerisch gesteuerten Werkzeugmaschine zu erweitern und effizienter, flexibler, intuitiver als auch noch sicherer zu gestalten, indem zusätzlich zu den herkömmlich bekannten direkten manuellen Bedienmöglichkeiten durch Berührung von Bedienelementen an einer Bedienvorrichtung der Maschine weitere Bedienmöglichkeiten geschaffen werden, die es der Bedienperson der Maschine ermöglichen, Bedien- bzw. Steuerbefehle an der Maschine durch berührungslose Bedienhandlungen auszulösen.

Die vorstehend genannten und weitere vorteilhafte Aspekte der vorliegenden Erfindung werden im Folgenden unter Bezugnahme auf die beigefügten Figuren und bevorzugte Ausführungsbeispiele der vorliegenden Erfindung beschrieben.

### Kurzbeschreibung der Figuren

**Fig. 1** zeigt beispielhaft eine numerisch gesteuerte Fräsmaschine 1 zum fräsenden Bearbeiten eines Werkstücks mit einer Bedienvorrichtung 2 zum Bedienen und Steuern der Fräsmaschine 1 gemäß einem Ausführungsbeispiel der vorliegenden Erfindung.
**Fig. 2** zeigt beispielhaft einen schematischen Aufbau einer Bedienvorrichtung 2 gemäß einem Ausführungsbeispiel der Erfindung.
**Fig. 3** zeigt eine beispielhaft eine Eingabeeinrichtung 22 zur Eingabe von berührungslosen Bedienhandlungen gemäß eines ersten bzw. zweiten Ausführungsbeispiels der vorliegenden Erfindung.
**Fig. 4** zeigt eine beispielhaft eine Eingabeeinrichtung 22 zur Eingabe von berührungslosen Bedienhandlungen gemäß eines dritten Ausführungsbeispiels der vorliegenden Erfindung.

### Ausführliche Beschreibung bevorzugter

### Ausführungsbeispiele der vorliegenden Erfindung

Im Folgenden werden bevorzugte beispielhafte Ausführungsformen der vorliegenden Erfindung anhand der beigefügten Figuren beschrieben. Die vorliegende Erfindung ist jedoch nicht auf die beschriebenen Ausführungsbeispiele beschränkt. Vielmehr soll die vorliegende Erfindung durch den Umfang der Patentansprüche angegeben werden. Gleiche bzw. ähnliche Merkmale in den Figuren und Ausführungsbeispielen werden mit gleichen Bezugsziffern gekennzeichnet. Eine Liste der verwendeten Bezugsziffern ist am Ende der Beschreibung aufgeführt.

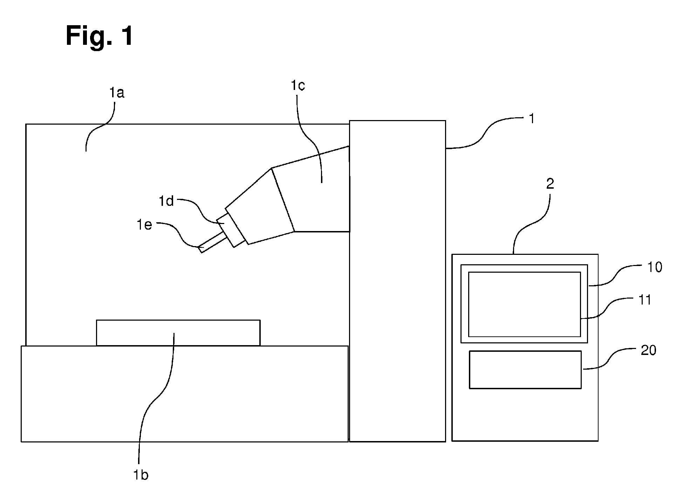

**Fig. 1** zeigt beispielhaft eine numerisch gesteuerte Fräsmaschine 1 zum fräsenden Bearbeiten eines Werkstücks mit einer Vorrichtung 2 zum Bedienen und Steuern der Fräsmaschine 1 gemäß einem Ausführungsbeispiel der vorliegenden Erfindung (die Vorrichtung wird im Folgenden kurz als Bedienvorrichtung 2 bezeichnet). Die vorliegende Erfindung ist jedoch nicht auf Bedienvorrichtungen für Fräsmaschinen wie im vorliegenden Ausführungsbeispiel beschränkt, sondern kann vielmehr auf die Bedienung von anderen numerisch gesteuerten Werkzeugmaschinen angewendet werden, wie z.B. Fräsmaschinen, Bohrmaschinen Fräs/Bohr-Werkzeugmaschinen, Universalfräsmaschinen, Bearbeitungszentren, Drehmaschinen, Drehautomaten etc. Weiterhin kann die Erfindung vorteilhaft für die Bedienung verschiedenster automatisierter Maschinen zur Handhabung, Montage oder Bearbeitung von Werkstücken aus Produktion und Fertigung angewendet werden.

Im vorliegenden Ausführungsbeispiel gemäß **Fig. 1** umfasst die Fräsmaschine 1 einen im Inneren eines Bearbeitungsraums 1a auf einem Maschinenbett angeordneten Rundtisch 1b zum Einspannen eines zu bearbeitenden Werkstücks mittels des Fräswerkzeugs 1e, welches in einer Arbeitsspindel 1d der Fräsmaschine 1 aufgenommen ist. Die Arbeitsspindel 1d ist an einem Spindelkopf 1c der Fräsmaschine angeordnet, der verfahrbar an einem Maschinenständer der Fräsmaschine 1 angebracht ist. Ein zu bearbeitendes Werkstück auf dem Rundtisch 1b ist mittels mehrerer CNC-steuerbarer Linear- und/oder Rund-Achsen relativ zu dem Werkzeug 1e verfahrbar, vorzugsweise mittels 5 numerisch steuerbarer Achsen.

Analog zu herkömmlich bekannten Bedienvorrichtungen (z.B. Bedienvorrichtungen, die mit der SINUMERIK Maschinensteuerung- und Bedien-Software eingerichtet sind), ermöglicht die Bedienvorrichtung 2 steuerbare Maschinenfunktionen der Werkzeugmaschine 1 zu steuern. Diese steuerbaren Maschinenfunktionen können je nach Ausführung der Maschine unter anderen insbesondere umfassen: Inbetriebnahme der Werkzeugmaschine, Konfiguration der Werkzeugmaschine, Einrichten der Werkzeugmaschine, Nullpunktsetzen, Rettungsfunktionen, Not-Aus-Aktivierung der Werkzeugmaschine, Fehlerdiagnose, Wartung, Programmverwaltung, Werkstückhandhabung, Palettenhandhabung, Werkzeugeingabe, Werkzeugvermessung, Werkzeugwechsel, NC-Steuerungsfunktionen einschließlich Aktivieren und Steuern von NC-Achsen und Aktoren der Werkzeugmaschine und/oder Programmierung der numerischen Steuerung. Hierzu ist die Bedienvorrichtung mit einer numerischen Steuerung (z.B. CNC-Steuerungseinrichtung) der Werkzeugmaschine 1 verbunden. Weiterhin kann die Bedienvorrichtung auch mit einer speicherprogrammierbaren Steuerung (SPS bzw. PLC) und/oder mit einem Not-Aus-Steuerschaltkreis der Werkzeugmaschine 1 verbunden sein.

Die Bedienvorrichtung 2 umfasst gemäß **Fig. 1** äußerlich sichtbar eine Anzeigeeinrichtung 10 mit einem Bildschirm 11 zur Anzeige einer graphischen Benutzeroberfläche zum Steuern und Überwachen von Maschinenfunktionen der Maschine 1 und eine Bedieneinrichtung 20 zur Eingabe von befehlsauslösenden Bedienhandlungen zum Steuern von Maschinenfunktionen der Maschine 1 und von Funktionen der graphischen Benutzeroberfläche durch eine Bedienperson der Maschine 1.

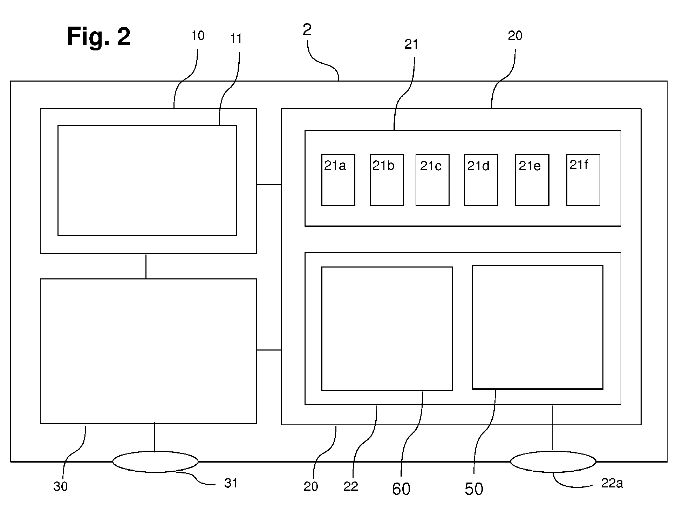

**Fig. 2** zeigt beispielhaft einen schematischen Aufbau einer Bedienvorrichtung 2 gemäß einem Ausführungsbeispiel der Erfindung. Die Bedienvorrichtung 2 umfasst die bereits in **Fig. 1** gezeigte Anzeigeeinrichtung 10 mit dem Bildschirm 11 zur Anzeige einer graphischen Benutzeroberfläche zum Steuern und Überwachen von Maschinenfunktionen der Maschine 1 und die Bedieneinrichtung 20 zur Eingabe von befehlsauslösenden Bedienhandlungen zum Steuern von Maschinenfunktionen der Maschine 1 und von Funktionen der graphischen Benutzeroberfläche durch eine Bedienperson der Maschine 1. Die Bedieneinrichtung 20 umfasst eine erste Eingabeeinrichtung 21 zur Eingabe von manuellen Bedienhandlungen. Hierfür umfasst die Eingabeeinrichtung 21 eine Mehrzahl von direkt manuell bedienbaren Bedienelementen 21a bis 21f, wie z.B. Tasten einer alphanumerischen Tastatur, eine Computer-Maus, einen Touchscreen (ggf. in Verbindung mit dem Bildschirm 11), Softkeys, Drehregler, Schalter, Knöpfe etc.

Weiterhin umfasst die Bedienvorrichtung 2 eine Steuereinrichtung 30 zum Umsetzen von an der Bedieneinrichtung 20 vom Bediener eingegebenen befehlsauslösenden Bedienhandlungen in zugeordnete Steuerbefehle zum Steuern von Maschinenfunktionen der Maschine 1 und von Funktionen der graphischen Benutzeroberfläche durch die Bedienperson, die dann über eine Schnittstelle 31 an die Werkzeugmaschine 1 übermittelt werden können, z.B. an die CNC-Steuerung der Maschine 1 oder ggf. auch an die PLC-Steuerung oder den Not-Aus-Schaltkreis der Maschine 1.

Neben der ersten Eingabeeinrichtung 21 zur Eingabe von manuellen Bedienhandlungen umfasst die Bedieneinrichtung 20 weiterhin eine zweite Eingabeeinrichtung 22 zur Eingabe von berührungslosen Bedienhandlungen mit einem Sensorsystem 50 zum Erfassen von berührungslosen Handlungen der Bedienperson und einer Detektionseinrichtung 60 zum Detektieren einer befehlsauslösenden Bedienhandlung der Bedienperson anhand der durch das Sensorsystem 50 erfassten berührungslosen Handlungen der Bedienperson. Das Sensorsystem 50 ist hierbei dazu eingerichtet optisch und/oder akustisch (z.B. mittels Kameras und/oder Mikrophonen) berührungslose Bedienhandlungen des Bedieners zu erfassen. Die Detektionseinrichtung 60 ist dazu eingerichtet, die von dem Sensorsystem 50 optisch bzw. akustisch erfassten berührungslosen Handlungen der Bedienperson mittels elektronischer Bildverarbeitungsmethoden für optische Signale und/oder Verarbeitungsmethoden für akustische Signale wie z.B. elektronische Spracherkennung zu erkennen bzw. als vordefinierte berührungslose Bedienhandlungen zu identifizieren, wobei die vordefinierten berührungslosen Bedienhandlungen bestimmten Steuer- bzw. Bedienbefehlen zugeordnet sind, die nach Erkennen der jeweiligen Bedienhandlung durch die Detektionseinrichtung 60 mittels der Steuereinrichtung 30 an die Werkzeugmaschine 1 übermittelt werden bzw. umgesetzt werden.

Die Bedienvorrichtung 2 umfasst weiterhin eine Datenschnittstelle 22a (z.B. USB-Schnittstelle, CD- oder Diskettenlaufwerk, RFID-Schnittstelle etc.) über die für die zweite Eingabeeinrichtung 22 bedienerspezifische Kalibrierungsdaten eingelesen werden können, z.B. im Rahmen einer Anmeldeprozedur des Bedieners an der Werkzeugmaschine 1, die auch zur Freischaltung einer Berechtigungsstufe des Bedieners bei Inbetriebnahme der Maschine 1 verwendet werden kann, wodurch der Bediener angemeldet wird und anhand seiner Berechtigungsstufe bestimmte Maschinenfunktionen für den Bediener je nach Berechtigungsstufe freigeschaltet oder gesperrt werden können. Die zweite Eingabeeinrichtung 22 zur berührungslosen Eingabe von Bedienbefehlen ist hierbei dazu eingerichtet, personenbezogen auf einen jeweiligen Bediener kalibriert zu werden. Die Kalibrierung auf den Bediener kann dann auf Grundlage der eingelesenen personenbezogenen Kalibrierungsdaten durchgeführt werden. Derartige Kalibrierungsdaten können zum Beispiel ein dem Bediener zugeordnetes Sprachmuster zum Kalibrieren einer Spracherkennungseinrichtung und/oder dem Bediener zugeordnete Körpermaßdaten zum Kalibrieren einer Bildverarbeitungseinrichtung umfassen.

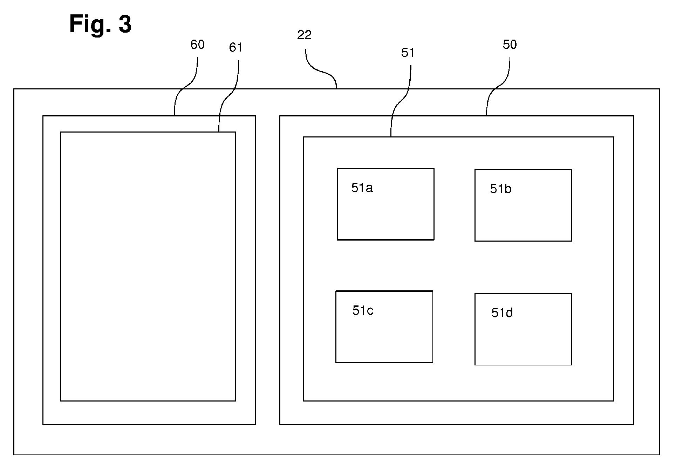

Fig. 3 zeigt eine beispielhaft eine Eingabeeinrichtung 22 zur Eingabe von berührungslosen Bedienhandlungen gemäß eines ersten bzw. zweiten Ausführungsbeispiels der vorliegenden Erfindung. Das Sensorsystem 50 der Eingabeeinrichtung 22 umfasst in Fig. 3 ein Kamerasystem 51 mit beispielhaft vier Kameras 51a bis 51d zum optischen Erfassen von mimischen und gestischen Handlungen der Bedienperson.

Die Detektionseinrichtung 60 der Eingabeeinrichtung 22 umfasst dementsprechend eine Bildverarbeitungseinrichtung 61, die dazu eingerichtet ist, auf Grundlage von Sensorsignalen des Kamerasystems 51 eine Bilderkennung durchzuführen. Insbesondere sind die Kameras 51a bis 51d gemäß des ersten Ausführungsbeispiels zum optischen Erfassen von mimischen Handlungen der Bedienperson eingerichtet. Alternativ (oder zusätzlich) sind die Kameras 51a bis 51d gemäß des zweiten Ausführungsbeispiels zum optischen Erfassen von gestischen Handlungen der Bedienperson eingerichtet. Die Bildverarbeitungseinrichtung 61 ist dazu eingerichtet, auf Grundlage von Sensorsignalen des Kamerasystems 51, die zumindest von zwei der Kameras 51a bis 51d erfasst werden, eine dreidimensionale Bilderkennung durchzuführen.

Hierzu sind in **Fig. 3** beispielhaft vier Kameras vorgesehen, da somit der Bereich, der von zumindest zwei Kameras erfasst wird und in dem somit eine dreidimensionale Erkennung der Bedienhandlung des Bedieners ermöglicht ist, vorteilhaft vergrößert werden kann. Bei Erkennung von Gesten kann eine Kamera bereits ausreichen; für eine dreidimensionale Bilderkennung mittels der Bildverarbeitungseinrichtung 61, die bei einer vorteilhaften Blickrichtungserkennung erforderlich ist und bei Gestenerkennung wesentlich bessere Ergebnisse erzielen kann, sind zumindest zwei Kameras vorzuziehen, wobei im optimalen Fall so viele Kameras vorgesehen sind, dass im gesamten Bereich um die Maschine 1 herum jede mögliche Position des Bedieners jeweils von zumindest zwei Kameras erfasst werden kann.

Gemäß des ersten Ausführungsbeispiels ist das Kamerasystem 51 dazu eingerichtet, die Augen bzw. Pupillen der Bedienperson optisch zu erfassen, wobei die Bildverarbeitungseinrichtung 61 dazu eingerichtet ist, eine Blickrichtung der Bedienperson auf Grundlage von optisch erfassten Pupillen der Augen der Bedienperson zu erkennen. Dies kann zum Beispiel auf besonders zweckmäßige Weise zur Steuerung der graphischen Benutzeroberfläche der Bedienvorrichtung 2 angewendet werden, indem die Bildverarbeitungseinrichtung 61 dazu eingerichtet ist, auf Grundlage der erkannten Blickrichtung eine Blickposition der Bedienperson auf der graphischen Benutzeroberfläche zu erfassen.

Die Steuereinrichtung 30 kann dann zum Beispiel dazu eingerichtet sein, auf Grundlage der erfassten Blickposition des Bedieners auf dem Bildschirm 11 Bildschirmbereiche der graphischen Benutzeroberfläche auszuwählen, auf Grundlage der erfassten Blickposition des Bedieners auf dem Bildschirm 11 Interaktionselemente der graphischen Benutzeroberfläche zu aktivieren, auf Grundlage der erfassten Blickposition des Bedieners auf dem Bildschirm 11 zwischen der Anzeige einer Mehrzahl von Bildschirmmasken der graphischen Benutzeroberfläche zu wechseln, oder auch diese Bildschirmmasken der graphischen Benutzeroberfläche auf der Anzeige zu verkleinern oder zu vergrößern, oder in diesen zu scrollen. Diese Anwendung kann bei Maschinen 1 noch weiter verbessert werden, wenn die Bildverarbeitungseinrichtung 61 dazu eingerichtet ist, auf Grundlage der erkannten Blickrichtung eine Blickposition der Bedienperson auf Bauteilen der Maschine 1 im Bearbeitungsbereich 1a zu erfassen. Besonders zweckmäßig kann die Steuereinrichtung 30 dazu eingerichtet werden, auf Grundlage der erfassten Blickposition des Bedieners auf einem Bauteil der Maschine 1 dem Bauteil zugeordnete Informations- bzw. Steuermasken auf der graphischen Benutzeroberfläche anzuzeigen. Der Bediener muss dieses dann nicht extra manuell aus- bzw. anwählen.

Wenn das Kamerasystem 51 dazu eingerichtet ist, die Augen bzw. Pupillen der Bedienperson zu erfassen, ist es weiterhin zweckmäßig, wenn die Bildverarbeitungseinrichtung 61 dazu eingerichtet ist, einen Lidschlag der Bedienperson auf Grundlage von optisch erfassten Augen der Bedienperson zu erkennen. Die Detektionseinrichtung 60 ist dann vorzugsweise dazu eingerichtet, auf Grundlage erfasster Lidschläge ein Lidschlagmuster zu erfassen, wobei ein Lidschlagmuster eine Anzahl von Lidschlägen und Zeitabstände zwischen Lidschlägen umfassen kann. Die Steuereinrichtung 30 kann dann dazu eingerichtet werden, ein erfasstes vorbestimmtes Lidschlagmuster mit einer vorbestimmten Anzahl von Lidschlägen in einem vorbestimmten Zeitintervall einem Bestätigungs- bzw. Ablehnungssteuerbefehl zum Bestätigen oder Ablehnen einer berührungslosen Bedienhandlung zuzuordnen.

Eine besonders zweckmäßige Ausgestaltung der Bedienvorrichtung 2 gemäß des ersten Ausführungsbeispiels, mit der eine erhebliche Verbesserung der Sicherheit an der Werkzeugmaschine 1 verbunden ist, kann bereitgestellt werden, indem die Bildverarbeitungseinrichtung 61 dazu eingerichtet wird, eine Änderung der Augen- bzw. Pupillengröße in den Augen der Bedienperson zu detektieren, und die Steuereinrichtung 30 dazu eingerichtet wird, einen Not-Aus an der Maschine 1 auszulösen, wenn eine abrupte Augen- bzw. Pupillenvergrößerung eines Bedieners detektiert wird und eine Blickrichtung des Bedieners als in den Bearbeitungsraum 1a der Maschine 1 blickend erkannt wird. Es kann dann nämlich davon ausgegangen werden, dass es sich bei der abrupte Augen- bzw. Pupillenvergrößerung um eine reflexartige Reaktion durch Erschrecken der Bedienperson aufgrund des optischen Erkennens einer Gefahrensituation im Bearbeitungsraum 1a der Maschine 1 handelt, wobei ohne Verzögerung durch Abwarten der Reaktionszeit des Bedieners ein sofortiger Not-Aus an der Maschine 1 ausgelöst werden kann.

Gemäß des zweiten Ausführungsbeispiels der vorliegenden Erfindung ist das Kamerasystem 51 dazu eingerichtet, Hände bzw. Arme der Bedienperson optisch zu erfassen, wobei die Bildverarbeitungseinrichtung 61 dazu eingerichtet ist, eine manuelle Gestenhandlung der Bedienperson zu erkennen. Die Bildverarbeitungseinrichtung 61 ist dementsprechend dazu eingerichtet, Gestenbefehle einer Mehrzahl von vordefinierten Gestenbefehlen zu erkennen, wobei jeder vordefinierte Gestenbefehl einer bestimmten befehlsauslösenden Bedienhandlung zugeordnet ist. Somit kann die Bedienperson Steuer- bzw. Bedienbefehle einfach und berührungslos mittels einfacher vordefinierter Gesten (insbesondere Handgesten) ausführen.

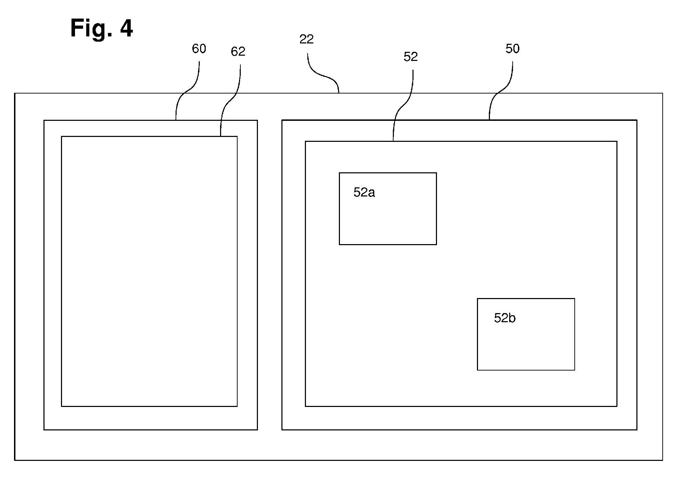

**Fig. 4** zeigt beispielhaft eine Eingabeeinrichtung 22 zur Eingabe von berührungslosen Bedienhandlungen gemäß eines dritten Ausführungsbeispiels der vorliegenden Erfindung. Das Sensorsystem 50 der Eingabeeinrichtung 22 umfasst hierbei ein Mikrophonsystem 52 zum Erfassen von akustischen Handlungen der Bedienperson, welches beispielhaft zwei Mikrophone 52a und 52b umfasst. Zwar ist für die akustische Erfassung ein Mikrophon 52a ausreichend, jedoch kann das zweite Mikrophon 52b (oder ggf. noch weitere Mikrophone) derart angeordnet sein, dass der Bereich zum Erfassen von akustischen Handlungen der Bedienperson vergrößert werden kann, oder weiterhin kann bei mehreren Mikrophonen aufgrund der Zeitverzögerung zwischen dem Empfangen des Signals an den Mikrophonen 52a und 52b (und ggf. weiteren Mikrophonen) je nach Position des Bedieners bei der akustischen Handlung eine Positionsinformation bezüglich des Aufenthaltsorts der Bedienperson berechnet werden.

Die Detektionseinrichtung 60 umfasst in **Fig. 4** eine Spracherkennungseinrichtung 62 zum Erkennen von mit dem Mikrophonsystem 52 erfassten Spracheingaben des Bedieners. Die Spracherkennungseinrichtung 62 ist dazu eingerichtet, Sprachbefehle des Bedieners aus einer Mehrzahl von vordefinierten Sprachbefehlen zu erkennen, wobei jeder vordefinierte Sprachbefehl einer bestimmten befehlsauslösenden Bedienhandlung zugeordnet ist. Somit kann der Bediener gemäß des dritten Ausführungsbeispiels mittels akustischer Sprachbefehle (z.B. mittels einfacher Sprachbefehle wie "JA", "NEIN", "OK", "STOP", "NOT-AUS" o.ä.) entsprechende Steuerbefehle abgeben, die dann an der Eingabeeinrichtung 22 erkannt werden und von der Steuereinrichtung 30 umgesetzt werden können.

Die Spracherkennungseinrichtung 62 ist hierbei gemäß dieses Ausführungsbeispiels dazu eingerichtet, ein Sprachmuster eines mittels des Mikrophonsystems 52 erfassten Sprachbefehls zu detektieren und die Steuereinrichtung 30 ist weiterhin dazu eingerichtet, einen Bediener mit einem zugeordneten gespeicherten Sprachmuster an der Maschine 1 anzumelden und nur erfasste Sprachbefehle auszuführen, die ein detektiertes Sprachmuster entsprechend des dem angemeldeten Bediener zugeordneten Sprachmusters aufweisen. Das Sprachmuster kann hierbei zum Beispiel bei der Kalibrierung mittels der Datenschnittstelle 22a erfolgen. Somit kann vorteilhaft verhindert werden, dass Sprachbefehle eines Bedieners an einer benachbarten Maschine 1, dessen Sprachbefehle das falsche Sprachmuster aufweisen, fälschlicherweise für die Steuerung der Maschine 1 verwendet werden, da nur Sprachbefehle mit dem Sprachmuster des angemeldeten Bedieners ausgeführt werden bzw. von der Steuereinrichtung 30 umgesetzt werden.

Eine besonders zweckmäßige Ausgestaltung der Bedienvorrichtung 2 gemäß des dritten Ausführungsbeispiels, mit der eine erhebliche Verbesserung der Sicherheit an der Werkzeugmaschine 1 verbunden ist, kann bereitgestellt werden, indem die Detektionseinrichtung 60 dazu eingerichtet wird, einen von dem Mikrophonsystem 52 erfassten Ausruf oder Schrei eines Bedieners und dessen Lautstärke zu detektieren. Die Steuereinrichtung 30 kann dann eingerichtet werden, einen Not-Aus an der Maschine 1 sofort automatisch auszulösen, wenn ein Ausruf oder Schrei des Bedieners mit einer Lautstärke größer eines vorbestimmten Lautstärkegrenzwerts von der Detektionseinrichtung 60 detektiert wird.

Vorliegend wurden beispielhaft bevorzugte Ausführungsbeispiele der vorliegenden Erfindung beschrieben. Die Merkmale der vorstehend beschriebenen Ausführungsbeispiele, insbesondere des ersten, zweiten und auch dritten Ausführungsbeispiels, und auch deren Modifikationen können einzeln angewendet werden sowie beliebig miteinander kombiniert werden. Die Bedienbarkeit der Maschine kann bei Kombinationen auf synergetische Weise bei Kombination verschiedener berührungsloser Bedienmöglichkeiten noch flexibler, intuitiver, effizienter und sicherer ausgestaltet werden. Sollte der Bediener auf eine oder mehrere der berührungslosen Bedienmöglichkeiten aufgrund persönlicher Präferenzen verzichten wollen, kann es natürlich vorgesehen sein, dass eine oder mehrere der berührungslosen Bedienmöglichkeiten zeitweise einzeln oder auch in Kombination deaktiviert werden. So kann sichergestellt werden, dass der Bediener die Wahl hat, ob er akustisch erfassbare berührungslose Bedienmöglichkeiten benutzen möchte (z.B. durch die Möglichkeit des Aktiviers bzw. Deaktivierens der Spracherkennung) und/oder ob er optisch erfassbare berührungslose Bedienmöglichkeiten benutzen möchte (z.B. durch die Möglichkeit des Aktiviers bzw. Deaktivierens der Bildverarbeitung, der Blickrichtungserkennung, der Blickpositionserkennung und/oder der Gestenerkennung).

Zusammenfassend ermöglicht es die vorliegende Erfindung auf äußerst zweckmäßige Weise, die Bedienbarkeit einer automatisierten Maschine zur Handhabung, Montage oder Bearbeitung von Werkstücken wie z.B. einer numerisch gesteuerten Werkzeugmaschine zu erweitern und effizienter, flexibler, intuitiver als auch noch sicherer zu gestalten, indem zusätzlich zu den herkömmlich bekannten direkten manuellen Bedienmöglichkeiten durch Berührung von Bedienelementen an einer Bedienvorrichtung der Maschine weitere Bedienmöglichkeiten geschaffen werden, die es der Bedienperson der Maschine ermöglichen, Bedien- bzw. Steuerbefehle an der Maschine durch berührungslose Bedienhandlungen auszulösen.

### Bezugszeichen

- Werkzeugmaschine: 1
- Bedienvorrichtung: 2
- Anzeigeeinrichtung: 10
- Bildschirm: 11
- Bedieneinrichtung: 20
- erste Eingabeeinrichtung: 21 (zur manuellen Eingabe)
- Bedienelemente: 21a, 21b, 21c, 21d, 21e, 21f
- zweite Eingabeeinrichtung: 22 (zur berührungslosen Eingabe)
- Datenschnittstelle: 22a
- Steuereinrichtung: 30
- Schnittstelle: 31
- Sensorsystem: 50
- Kamerasystem: 51
- Kamera: 51a, 51b, 51c, 51d
- Mikrophonsystem: 52
- Mikrophon: 52a, 52b
- Detektionseinrichtung: 60
- Bildverarbeitungseinrichtung: 61
- Spracherkennungseinrichtung: 62

## Patentansprüche

1. Vorrichtung zum Bedienen einer automatisierten Maschine zur Handhabung, Montage oder Bearbeitung von Werkstücken, mit:
- einer Anzeigeeinrichtung (10) mit einem Bildschirm (11) zur Anzeige einer graphischen Benutzeroberfläche zum Steuern und/oder Überwachen von Maschinenfunktionen der Maschine (1);
- einer Bedieneinrichtung (20) zur Eingabe von befehlsauslösenden Bedienhandlungen zum Steuern von Maschinenfunktionen der Maschine (1) und/oder von Funktionen der graphischen Benutzeroberfläche durch eine Bedienperson der Maschine (1), umfassend eine erste Eingabeeinrichtung (21) zur Eingabe von manuellen Bedienhandlungen und eine zweite Eingabeeinrichtung (22) zur Eingabe von berührungslosen Bedienhandlungen,
wobei die zweite Einrichtung (21) zur Eingabe von berührungslosen Bedienhandlungen umfasst:
- ein Sensorsystem (50) zum Erfassen von berührungslosen Handlungen der Bedienperson, und
- eine Detektionseinrichtung (60) zum Detektieren einer befehlsauslösenden Bedienhandlung der Bedienperson anhand der durch das Sensorsystem (50) erfassten berührungslosen Handlungen der Bedienperson; und
- eine Steuereinrichtung (30) zum Umsetzen von manuell oder berührungslos eingegebenen befehlsauslösenden Bedienhandlungen in zugeordnete Steuerbefehle zum Steuern von Maschinenfunktionen der Maschine (1) und/oder von Funktionen der graphischen Benutzeroberfläche durch die Bedienperson.

2. Vorrichtung nach Anspruch 1, **dadurch gekennzeichnet, dass** das Sensorsystem (50) ein Kamerasystem (51) mit zumindest einer Kamera (51a) zum optischen Erfassen von mimischen und gestischen Handlungen der Bedienperson aufweist, wobei die Detektionseinrichtung (60) eine Bildverarbeitungseinrichtung (61) umfasst, die dazu eingerichtet ist, auf Grundlage von Sensorsignalen des Kamerasystems eine Bilderkennung durchzuführen.

3. Vorrichtung nach Anspruch 2, **dadurch gekennzeichnet, dass** das Kamerasystem (51) zumindest zwei voneinander beabstandet angeordnete Kameras (51a, 51b, 51c, 51d) zum optischen Erfassen von mimischen und gestischen Handlungen der Bedienperson aufweist, wobei die Bildverarbeitungseinrichtung (61) dazu eingerichtet ist, auf Grundlage von Sensorsignalen des Kamerasystems (51) eine dreidimensionale Bilderkennung durchzuführen.

4. Vorrichtung nach Anspruch 3, **dadurch gekennzeichnet, dass** das Kamerasystem (51) dazu eingerichtet ist, Augen der Bedienperson optisch zu erfassen, wobei die Bildverarbeitungseinrichtung (61) dazu eingerichtet ist, eine Blickrichtung der Bedienperson auf Grundlage von optisch erfassten Pupillen der Augen der Bedienperson zu erkennen.

5. Vorrichtung nach Anspruch 3 oder 4, **dadurch gekennzeichnet, dass** die Bildverarbeitungseinrichtung (61) dazu eingerichtet ist, eine Änderung der Augen- bzw. Pupillengröße in den Augen der Bedienperson zu detektieren, wobei die Steuereinrichtung (30) dazu eingerichtet ist, einen Not-Aus an der Maschine (1) auszulösen, wenn eine abrupte Augen- bzw. Pupillenvergrößerung eines Bedieners detektiert wird oder wenn eine abrupte Augen- bzw. Pupillenvergrößerung eines Bedieners detektiert wird und eine Blickrichtung des Bedieners als in den Bearbeitungsraum der Maschine blickend erkannt wird.

6. Vorrichtung nach Anspruch 4 oder 5, **dadurch gekennzeichnet, dass** die Bildverarbeitungseinrichtung (61) dazu eingerichtet ist, auf Grundlage der erkannten Blickrichtung eine Blickposition der Bedienperson auf der graphischen Benutzeroberfläche zu erfassen, und
wobei die Steuereinrichtung (30) dazu eingerichtet ist, auf Grundlage der erfassten Blickposition des Bedieners auf dem Bildschirm (11) Bildschirmbereiche der graphischen Benutzeroberfläche auszuwählen, auf Grundlage der erfassten Blickposition des Bedieners auf dem Bildschirm (11) Interaktionselemente der graphischen Benutzeroberfläche zu aktivieren, und/oder auf Grundlage der erfassten Blickposition des Bedieners auf dem Bildschirm (11) zwischen der Anzeige einer Mehrzahl von Bildschirmmasken der graphischen Benutzeroberfläche zu wechseln.

7. Vorrichtung nach einem der Ansprüche 4 bis 6, **dadurch gekennzeichnet, dass**
die Bildverarbeitungseinrichtung (61) dazu eingerichtet ist, auf Grundlage der erkannten Blickrichtung eine Blickposition der Bedienperson auf Bauteilen der Maschine (1) im Bearbeitungsbereich zu erfassen, und
die Steuereinrichtung (30) dazu eingerichtet ist, auf Grundlage der erfassten Blickposition des Bedieners auf einem Bauteil der Maschine (1) dem Bauteil zugeordnete Informations- bzw. Steuermasken auf der graphischen Benutzeroberfläche anzuzeigen.

8. Vorrichtung nach einem der Ansprüche 2 bis 7, **dadurch gekennzeichnet, dass**
die Bildverarbeitungseinrichtung (61) dazu eingerichtet ist, einen Lidschlag der Bedienperson auf Grundlage von optisch erfassten Augen der Bedienperson zu erkennen,
wobei die Detektionseinrichtung (60) dazu eingerichtet ist, auf Grundlage erfasster Lidschläge ein Lidschlagmuster zu erfassen, wobei ein Lidschlagmuster eine Anzahl von Lidschlägen und Zeitabstände zwischen Lidschlägen umfasst, wobei die Steuereinrichtung (30) dazu eingerichtet ist, ein erfasstes vorbestimmtes Lidschlagmuster mit einer vorbestimmten Anzahl von Lidschlägen in einem vorbestimmten Zeitintervall einem Bestätigungssteuerbefehl zum Bestätigen einer berührungslosen Bedienhandlung zuzuordnen.

9. Vorrichtung nach einem der Ansprüche 2 bis 8, **dadurch gekennzeichnet, dass**
das Kamerasystem (51) dazu eingerichtet ist, Hände der Bedienperson optisch zu erfassen, wobei die Bildverarbeitungseinrichtung (61) dazu eingerichtet ist, eine manuelle Gestenhandlung der Bedienperson zu erkennen, und
die Bildverarbeitungseinrichtung (61) dazu eingerichtet ist, Gestenbefehle einer Mehrzahl von vordefinierten Gestenbefehlen zu erkennen, wobei jeder vordefinierte Gestenbefehl einer bestimmten befehlsauslösenden Bedienhandlung zugeordnet ist.

10. Vorrichtung nach einem der Ansprüche 1 bis 9, **dadurch gekennzeichnet, dass**
das Sensorsystem (50) ein Mikrophonsystem (52) zum Erfassen von akustischen Handlungen der Bedienperson aufweist,
wobei die Detektionseinrichtung (60) eine Spracherkennungseinrichtung (62) zum Erkennen von mit dem Mikrophonsystem (52) erfassten Spracheingaben des Bedieners aufweist, und
wobei die Spracherkennungseinrichtung (62) dazu eingerichtet ist, Sprachbefehle des Bedieners aus einer Mehrzahl von vordefinierten Sprachbefehlen zu erkennen, wobei jeder vordefinierte Sprachbefehl einer bestimmten befehlsauslösenden Bedienhandlung zugeordnet ist.

11. Vorrichtung nach Anspruch 10, **dadurch gekennzeichnet, dass** die Spracherkennungseinrichtung (62) dazu eingerichtet ist, ein Sprachmuster eines mittels des Mikrophonsystems (52) erfassten Sprachbefehls zu detektieren, wobei die Steuereinrichtung (30) dazu eingerichtet ist, einen Bediener mit einem zugeordneten gespeicherten Sprachmuster an der Maschine (1) anzumelden und nur erfasste Sprachbefehle auszuführen, die ein detektiertes Sprachmuster entsprechend des dem angemeldeten Bediener zugeordneten Sprachmusters aufweisen.

12. Vorrichtung nach einem der Ansprüche 1 bis 11, **dadurch gekennzeichnet, dass**
das Sensorsystem (50) ein Mikrophonsystem (52) zum Erfassen von akustischen Handlungen der Bedienperson aufweist, und
die Detektionseinrichtung (60) dazu eingerichtet ist, einen von dem Mikrophonsystem (52) erfassten Ausruf oder Schrei eines Bedieners und dessen Lautstärke zu detektieren, wobei die Steuereinrichtung (30) dazu eingerichtet ist, einen Not-Aus an der Maschine (1) auszulösen, wenn ein Ausruf oder Schrei eines Bedieners mit einer Lautstärke größer eines vorbestimmten Lautstärkegrenzwerts von der Detektionseinrichtung (60) detektiert wird.

13. Vorrichtung nach einem der vorhergehenden Ansprüche, **dadurch gekennzeichnet, dass** die zweite Eingabeeinrichtung (22) zur berührungslosen Eingabe von Bedienbefehlen dazu eingerichtet ist, personenbezogen auf einen jeweiligen Bediener kalibriert zu werden, wobei die zweite Eingabeeinrichtung (22) eine Datenschnittstelle (22a) aufweist zum Einlesen von personenbezogenen Kalibrierungsdaten, so dass die Kalibrierung auf den Bediener auf Grundlage der personenbezogenen Kalibrierungsdaten durchgeführt wird.

14. Vorrichtung nach Anspruch 13, **dadurch gekennzeichnet, dass** die Kalibrierungsdaten ein dem Bediener zugeordnetes Sprachmuster zum Kalibrieren einer Spracherkennungseinrichtung (62) und/oder dem Bediener zugeordnete Körpermaßdaten zum Kalibrieren einer Bildverarbeitungseinrichtung (61) umfassen.

15. Automatisierte Maschine zur Handhabung, Montage oder Bearbeitung von Werkstücken umfassend eine Vorrichtung (2) nach einem der vorhergehenden Ansprüche.
